# EUROPEAN PATENT APPLICATION

(11) **EP 4 343 016 A1**
(43) Date of publication of application: **27.03.2024**
(21) Application number: 22833209.4
(22) Date of filing: 29.06.2022
(51) Int. Cl.: C23C 4/06, B23K 35/30, C21D 9/56, C22C 19/07, C23C 4/18

(54) **COATING MATERIAL FOR IN-FURNACE STRUCTURE, SURFACE COATING METHOD, AND IN-FURNACE STRUCTURE**

(30) Priority: 30.06.2021 JP 2021108964
(71) Applicant: JFE Steel Corporation, Tokyo 100-0011 (JP); Tocalo Co., Ltd., Kobe-shi, Hyogo 650-0047 (JP)
(72) Inventor: YAMADA, Tatsumichi, Tokyo 100-0011 (JP); KONDO, Chihiro, Tokyo 100-0011 (JP); TANOKUCHI, Ichiro, Tokyo 100-0011 (JP); OKUNO, Shinichi, Tokyo 100-0011 (JP); UENO, Masayasu, Tokyo 100-0011 (JP); SUIDZU, Tatsuo, Akashi-shi, Hyogo 674-0093 (JP); YAMAGUCHI, Kei, Akashi-shi, Hyogo 674-0093 (JP)
(74) Representative: Grünecker Patent- und Rechtsanwälte PartG mbB
(86) International application number: PCT/JP2022/025968
(87) International publication number: WO 2023/277063

(57) **Abstract**

Provided are a coating material and a surface coating method for an in-furnace structure, and an in-furnace structure that are excellent in resistance to corrosion by the sulfur group. The coating material for an in-furnace structure used in a high-temperature corrosive environment including a sulfur group element comprises as component composition, by mass, Co: 45% to 72%, both inclusive, Mo: 20% to 35%, both inclusive, Cr: 8% to 25%, both inclusive, and Si: 0.1% to 5%, both inclusive, and substantially without Ni. In the surface coating method for an in-furnace structure used in a high-temperature corrosive environment including a sulfur group element, a coating is formed on a surface of the in-furnace structure by overlay welding or thermal spraying of the above-described coating material. In the in-furnace structure used in a high-temperature corrosive environment including a sulfur group element, a coating using the above-described coating material is formed on a surface of the in-furnace structure.

## Description

### Technical Field

The present invention relates to an in-furnace structure that is disposed in a high-temperature corrosive atmosphere including any sulfur group element among sulfur, selenium, and tellurium, a coating material and a surface coating method that impart excellent corrosion resistance to the in-furnace structure.

In particular, for an annealing furnace in which steel sheets are annealed, the present invention also relates to a coating material to be applied to a surface of a hearth roll that transfers steel sheets.

### Background Art

Generally, an accelerated wear phenomenon called high-temperature corrosion is known as sulfurization when the atmosphere or contacting substance includes a compound of any sulfur group element among sulfur, selenium, and tellurium, and this phenomenon is experienced in heating furnaces where a relatively high-temperature combustion gas is used. In an in-furnace structure in such a high-temperature corrosive environment including a sulfur group element, sulfurization leads to tear and wear the facility.

Patent Literature 1 discloses a technique of imparting sulfuric acid corrosion resistance as wear resistance and acid resistance to an in-furnace structure by thermal-spraying the in-furnace structure with a chromium carbidecontaining cermet, a chromium carbide, a self-fluxing alloy and an Ni-based alloy such as a Hastelloy (registered trademark) alloy or an Inconel (trademark) alloy.

A hearth roll that transfers a steel sheet in a steel manufacturing process is used continuously for a long period of time, and consequently suffers the problem of so-called build-up in which suspended matter inside the furnace and oxide and iron dust on the steel sheet adhere and deposit onto the surface of the hearth roll. As a countermeasure therefor, Patent Literature 2 discloses a technique of providing a hearth roll with build-up resistance by thermal-spraying the surface of the hearth roll with a thermal spraying material containing Co and Al and further including one element or more selected from Cr, Ni, C, Ta, Y, Mo, and Zr so as to modify the surface properties.

### Citation List

### Patent Literature

Patent Literature 1: JPH09-075832A
Patent Literature 2: JPS60-141861A

### Summary of Invention

### Technical Problem

However, the above-described conventional techniques have the following problems. In a furnace having a high-temperature corrosive atmosphere including any sulfur group element among sulfur, selenium, and tellurium, heat-resistant steel and heat- and corrosion-resistant alloy that are in-furnace structures are improved in corrosion resistance by means of thermal spraying. However, there is a problem that, as sulfurization by these sulfur group elements cannot be eliminated, in-furnace structures tear and wear, and the lifetime of the facility shortens as well as the maintenance cost increases.

The present inventors have elucidated the mechanism of the phenomenon of corrosion by sulfur group elements. On that basis, the present invention aims to provide a coating material for an in-furnace structure that has solved the above-described problems and has excellent resistance to corrosion by the sulfur group, to propose a surface coating method for an in-furnace structure with the coating material, and further to provide an in-furnace structure having corrosion resistance at high temperature.

### Solution to Problem

In the present invention, alloy design is optimized so as to solve the above-described problems, and thereby a corrosion preventive material excellent in resistance to corrosion by the sulfur group is found. Thus, the present invention provides a coating material for an in-furnace structure used in a high-temperature corrosive environment including a sulfur group element, characterized in that the coating material comprises as component composition, by mass, Co: 45% to 72%, both inclusive, Mo: 20% to 35%, both inclusive, Cr: 8% to 25%, both inclusive, and Si: 0.1% to 5%, both inclusive, and substantially without Ni.

The coating material for an in-furnace structure of the present invention configured as described above could be a more preferable solution when the coating material further comprises as component composition, by mass, at least one element selected from Al: 8.0% or less, Y: 1.5% or less, Ta: 7.0% or less, Mg: 2.0% or less, and W: 8.0% or less.

Secondly, the present invention proposes a surface coating method for an in-furnace structure used in a high-temperature corrosive environment including a sulfur group element, characterized in that a coating is formed on a surface of the in-furnace structure by overlay welding or thermal spraying using the above-described coating material.

Thirdly, the present invention provides an in-furnace structure used in a high-temperature corrosive environment including a sulfur group element, characterized in that a coating using the above-described coating material is formed on a surface of the in-furnace structure.

The in-furnace structure of the present invention configured as described above could be a more preferable solution when:
a. the coating is formed by a thermal spraying method, and pores in the coating are sealed with an inorganic sealer; and
b. the in-furnace structure is a roll inside an annealing furnace.

### Advantageous Effects of Invention

The present invention can improve the resistance to corrosion by the sulfur group of an in-furnace structure used in a high-temperature corrosive environment including a sulfur group element by forming, on the in-furnace structure, a coating made of a coating material that is composed mainly of Co and contains predetermined amounts of Mo and Cr but substantially without Ni, as component composition. Thus, the present invention makes it possible to prevent high-temperature corrosion due to a eutectic reaction and thereby prolong the useful life of the in-furnace structure.

In particular, the present invention has an advantage in that, since high-temperature corrosion does not occur, the smoothness and the stability of the surface of a roll inside an annealing furnace that transfers a steel sheet can be maintained over a long period of time so as to prevent degradation of the surface quality of the steel sheet transferred thereon.

In addition, the present invention has another advantage in that, as a coating made of the above-described coating material is formed on the surface of the in-furnace structure by a thermal spraying method and an inorganic sealing treatment is performed on the surface of the coating, pores formed in the coating can be sealed as well as a protective oxide coating can be formed on the surface to thereby further improve the resistance to corrosion by the sulfur group.

### Brief Description of Drawings

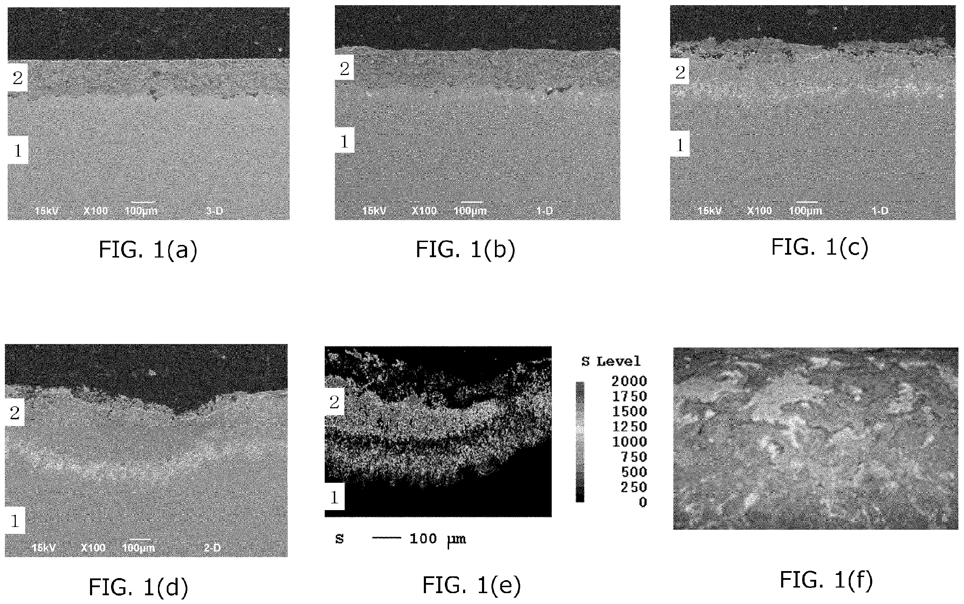

FIG. 1 is magnified pictures showing how tear and wear of an in-furnace structure due to sulfurization at high temperature progresses, of which FIG. 1(a) is an SEM picture of a surface cross-section in an initial state; FIG. 1(b) is an SEM picture of the surface cross-section showing roughness of the surface; FIG. 1(c) is an SEM picture of the surface cross-section showing progress of corrosion; FIG. 1 (d) is an SEM picture of the surface cross-section showing wear of a coating; FIG. 1(e) is a map of a result of an S analysis of the surface cross-section showing a state of entry and reaction of S in the coating; and FIG. 1(f) is an SEM picture of a surface of a structure showing a state of wear in actual equipment.

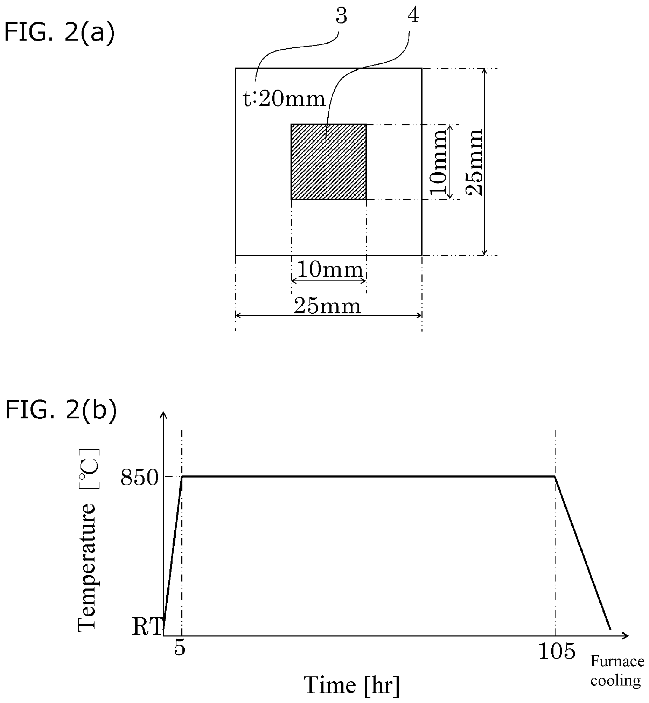

FIG. 2 is conceptual views showing a high-temperature corrosion test method simulating sulfurization, of which FIG. 2 (a) shows the shape of a sample and a state of application of corrosion ash; and FIG. 2 (b) shows a heating pattern.

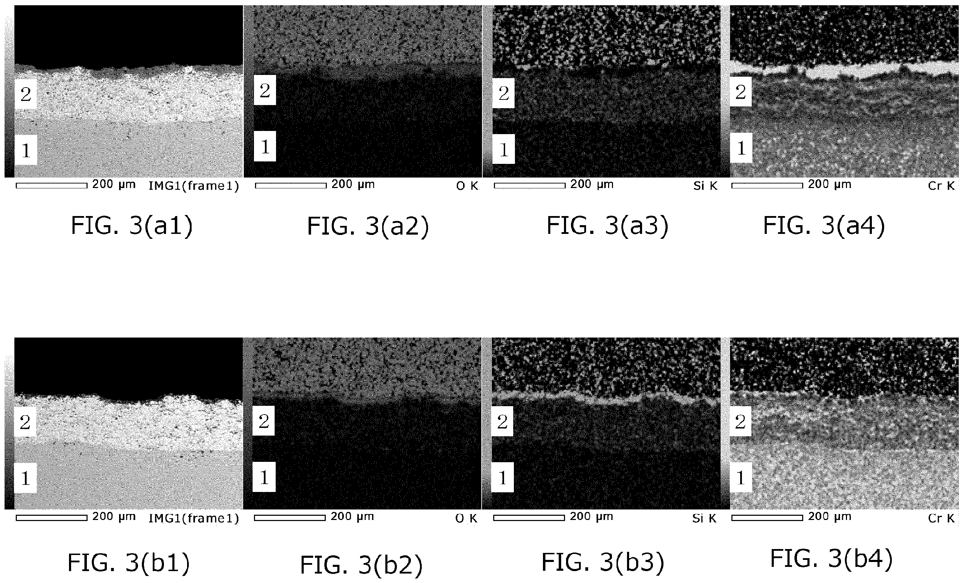

FIG. 3 is pictures of surface cross-sections of test samples after a high-temperature corrosion test showing an effect of a sealing treatment, of which FIG. 3(a1) shows an SEM image of a sample not subjected to the sealing treatment; FIG. 3(a2) shows a map of an O analysis of the sample; FIG. 3(a3) shows a map of an Si analysis of the sample; FIG. 3(a4) shows a map of a Cr analysis of the sample; FIG. 3(b1) shows an SEM image of a sample subjected to the sealing treatment; FIG. 3(b2) shows a map of an O analysis of the sample; FIG. 3(b3) shows a map of an Si analysis of the sample; and FIG. 3(b4) shows a map of a Cr analysis of the sample.

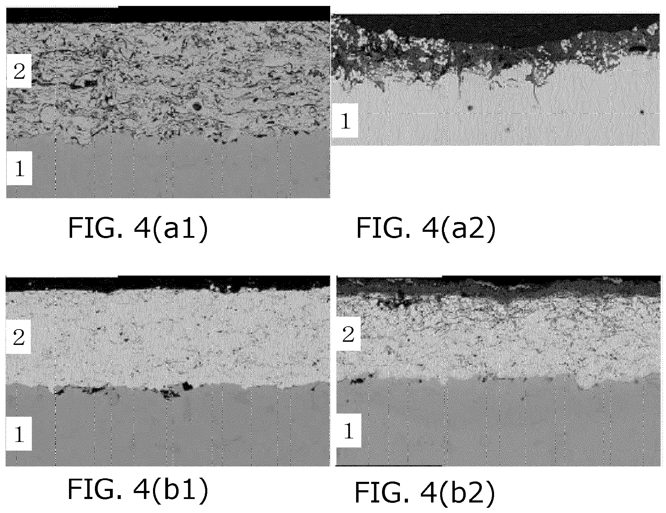

FIG. 4 are SEM pictures of a surface cross-section of a roll used in a high-temperature corrosive environment, of which FIG. 4(a1) shows the roll before use in a conventional example; FIG. 4(a2) shows the roll after use in the conventional example; FIG. 4(b1) shows the roll before use in an example of the present invention; and FIG. 4(b2) shows the roll after use in the example of the present invention.

### Description of Embodiments

### <Mechanism of Corrosion by Sulfur Group Elements>

The present inventors presumed that the phenomenon of high-temperature corrosion by sulfur group elements is based on the following mechanism.
(1) Heat-resistant steel and heat- and corrosion-resistant alloy are provided with certain resistance to corrosion in a high-temperature environment by a protective oxide coating formed on their surfaces. However, this protective oxide coating grows and thickens through a reaction with an atmosphere during the period of use, so that stress inside the coating increases. This leads to partial peeling, which causes the protective oxide coating to chip off. In addition, the protective oxide coating chips off due to, for example, wear resulting from mechanical contact with an object transferred thereon etc.
(2) After having chipped off, the protective oxide coating can be reproduced as long as elements such as Al and Cr contained in the coating are present in the material surface. However, deficiency of the elements to form the protective oxide coating occurs eventually.
(3) When the protective oxide coating is lost, i.e., the elements to form the protective oxide coating become deficient, base metal components Ni, Co, Fe, etc. in the heat-resistant steel and the heat- and corrosion-resistant alloy react with sulfur group elements.
(4) As a eutectic reaction occurs between sulfur group elements and these base metal components in the alloy, the material melts, leading to wear.

FIG. 1 shows changes in the form of a protective coating leading to tear and wear, and a state of corrosion by sulfur group elements. The in-furnace structure of FIG. 1 is a transfer roll of an annealing furnace, and is used in an atmosphere of 700°C or higher including a sulfur group compound. FIG. 1(a) is an SEM picture of a surface cross-section of the in-furnace structure in an initial state, and a coating 2 is formed on a surface of a base material 1 to a thickness of about 200 µm. This coating 2 is formed by depositing a heat-resistant Co-Ni-Cr-Al-Y-Ta-Si alloy by a thermal spraying method. FIG. 1(b) shows an SEM picture of the surface cross-section of the in-furnace structure at a point when surface roughness starts to appear as a result of 720 hours of use. FIG. 1(c) is an SEM picture of the surface cross-section of the in-furnace structure showing a state of progress of corrosion as a result of 2160 hours of use. Corrosion is recognizable in about half of the thickness of the coating 2. FIG. 1(d) is an SEM picture of the surface cross-section of the in-furnace structure showing a state where part of the coating 2 is peeled and corrosion progresses to the base material 1 as a result of 2880 hours of use. FIG. 1(e) is a map of a result of an S analysis in the same field of view as FIG. 1(d), clearly showing the state of entry of S into the coating 2 and appearance of a eutectic reaction between the base material 1 and S.

Based on the understanding of the mechanism of high-temperature corrosion by sulfur group elements as has been described above, component design of a coating material for an in-furnace structure has been explored. First, while a heat-resistant alloy has been used as a surface coating material for an in-furnace structure in a corrosive atmosphere including a sulfur group element at high temperature, as described above, Ni and Co in the alloy lower the melting point through a eutectic reaction with a sulfur group element, such as S, and thus contribute to promoting corrosion.

In particular, as the eutectic temperature between Ni and S is 645°C, the component design is based on not containing Ni. On the other hand, it is found that, as Cr and Mo combined with a sulfur group element, such as S, form compounds with high melting points, they improve high-temperature stability and contribute to corrosion resistance. Thus, it is found that adopting a Co-based alloy containing appropriate amounts of Cr and Mo significantly improved the resistance to corrosion by the sulfur group. In addition, in the present embodiment, in the case where a coating is formed on a surface of an in-furnace structure by a thermal spraying method, further performing an inorganic sealing treatment on the surface can further improve the resistance to corrosion by the sulfur group, thereby allowing a longer useful life of the in-furnace structure.

In the following, the component composition of a coating material for an in-furnace structure that is a first embodiment of the present invention will be described. Unless otherwise noted, in the following, "%" for chemical composition represents "mass%."

### Co: 45% to 72%, both inclusive

In the embodiment, Ni that has a low eutectic point with sulfur group elements is excluded from the coating alloy, and Co is adopted as a main component, so that excellent resistance to corrosion by the sulfur group can be achieved without forming melted matter due to a eutectic reaction. Co is a main constituent element of the coating material of the embodiment, and is contained within a range of 45% to 72%, both inclusive. When Co is less than 45%, sufficient corrosion resistance cannot be achieved, whereas when Co exceeds 72%, an improving effect on the corrosion resistance of Mo and Cr, to be described later, cannot be achieved. Therefore, the content of Co should be within a range of 45% to 72%, both inclusive. A preferable range is 48% to 65%, both inclusive.

### Mo: 20% to 35%, both inclusive

Mo has a high melting point as a compound with a sulfur group element, such as S, and improves the corrosion resistance of a Co-based alloy at high temperature. When Mo is less than 20%, Co may undergo a eutectic reaction with a sulfur group element. Therefore, to contribute to enhancing the corrosion resistance of Co and raise the eutectic point, Mo needs to account for 20% or more. On the other hand, when Mo exceeds 35%, the content ratio of Co decreases, which may conversely reduce the corrosion resistance. Therefore, the upper limit should be 35%. A preferable range is 25% to 30%, both inclusive.

### Cr: 8% to 25%, both inclusive

Cr has a high melting point as a compound with O or a sulfur group element, such as S, and improves the corrosion resistance of a Co-based alloy at high temperature. When Cr is less than 8%, tear and wear occurs due to a high-temperature oxidation reaction caused by oxygen in a high-temperature atmosphere. Therefore, the content of Cr should be 8% or more. On the other hand, when Cr is contained at a ratio exceeding 25%, the above-described effect saturates, and moreover the content of Co decreases, which may conversely reduce the corrosion resistance. Therefore, the upper limit should be 25%. A preferable range is 8% to 20%, both inclusive.

### Si: 0.1% to 5%, both inclusive

Si improves high-temperature hardness by forming Mo silicide, and like Cr, has a preventing effect on corrosion of a Co-based alloy. Si can be added up to 5%. To achieve the above-described effect, Si needs to be contained at a ratio of 0.1% or more, and is preferably contained at a ratio of 2.5% or more.

### Ni: substantially not contained

As described above, Ni has a low melting point as a eutectic compound with a sulfur group element, such as S, and may promote sulfurization of an in-furnace structure used in an atmosphere of 700°C or higher. Therefore, Ni should be substantially not contained. "Substantially not contained" means that Ni is not actively added, and does not exclude Ni as inevitable impurities.

Other than the elements described above, as elements that improve the corrosion resistance or the coating's peeling resistance, at least one element selected from Al: 8.0% or less, Y: 1.5% or less, Ta: 7.0% or less, Mg: 2.0% or less, and W: 8.0% or less may be contained.

When Al is contained at a ratio exceeding 8.0%, as the contents of other effective elements decrease, the corrosion resistance may conversely decrease. Therefore, the upper limit of Al content should be 8.0%.

While Y improves the peeling resistance of surface oxide such as Cr, Al, and Si, when Y is contained at a ratio exceeding 1.5%, this effect saturates. Therefore, the upper limit of Y content should be 1.5%.

When Ta is contained at a ratio exceeding 7.0%, it forms Ta oxide and reduces the corrosion resistance. Therefore, the upper limit of Ta content should be 7.0%.

When Mg is contained at a ratio exceeding 2.0%, it generates a compound with a low melting point. Therefore, the upper limit of Mg content should be 2.0%.

While W improves the high-temperature hardness of the coating as well as contributes to improving the corrosion resistance, when contained at a ratio exceeding 8.0%, W forms W oxide and reduces the corrosion resistance. Therefore, the upper limit of W content should be 8.0%.

Next, a second embodiment of the present invention is a method of forming a coating on a surface of an in-furnace structure using a coating material of the above-described component composition. As that method, overlay welding or a thermal spraying method can be named as examples. It is preferable that a coating is formed by overlay welding such as laser welding or plasma transferred arc (PTA) welding, or thermal spraying such as plasma thermal spraying, high velocity oxy-fuel (HVOF) thermal spraying, or detonation flame spraying. In particular, in the case where the coating material of the embodiment is formed into a coating by a thermal spraying method, pores are formed in the thermal-sprayed coating. When sulfur group elements enter the coating through these pores, corrosion of the base-material alloy may occur. Therefore, a sealing treatment is further performed on this coating using an inorganic sealer to thereby prevent corrosive components from entering the pores and further improve the resistance of the coating to corrosion by the sulfur group.

Further, a third embodiment of the present invention is an in-furnace structure having the above-described coating formed on its surface. In particular, in the case where the coating is formed by a thermal spraying method, it is preferable that pores are sealed with an inorganic sealer. As the inorganic sealer, a chromic acid-based sealer, a metallic alkoxide alcohol-based sealer, and a silicate-based sealer that form metallic oxide can be named as examples. In particular, a silicate-based inorganic sealer is preferable. The embodiment is suitably applied to a roll inside an annealing furnace as the in-furnace structure, and produces a significant effect of use also in terms of build-up resistance. It is known that a combustion gas inside an annealing furnace contains a large amount of compounds of sulfur group elements.

### Examples

### <Example 1>

Using 24Cr-12Ni steel (SCH13) as a base material, test samples on which coatings made of coating materials of the component composition in Table 1 were formed by a thermal spraying method were produced and subjected to a corrosion test at high temperature shown in FIG. 2. For the inorganic sealing treatment, a silicate-based inorganic sealer was used. The shape of each sample shown in FIG. 2(a) is 25 mm square with a thickness of 20 mm, and 540 mg of sodium sulfate (Na₂SO₄) was applied as corrosion ash to a 10 mm-square area in the surface of the sample. The samples were heated in the temperature pattern shown in FIG. 2(b). The remnant ratio of coating was obtained as a percentage from the thicknesses of the coating in SEM images of the cross-section of the sample before and after the corrosion test. The result is included in Table 1.

**[Table 1]**

| No. | Coating material ingredient composition (mass%) | | | | | | | | | | Inorganic sealer applied? | Remnant ratio(%)of coating | Remarks |
|---|---|---|---|---|---|---|---|---|---|---|---|---|---|
| | Co | Ni | Cr | Mo | Al | Y | Ta | Si | W | Others | | | |
| 1 | 49.3 | - | 17.6 | 28.6 | - | - | - | 4.5 | - | | No | 93.3 | Invention Example |
| 2 | 60.1 | - | 8.8 | 28.3 | - | - | - | 2.8 | - | | No | 84.2 | Invention Example |
| 3 | 49.3 | - | 17.6 | 28.6 | - | - | - | 4.5 | - | | Yes | 98.3 | Invention Example |
| 4 | 60.1 | - | 8.8 | 28.3 | - | - | - | 2.8 | - | | Yes | 88.2 | Invention Example |
| 5 | 59.5 | - | 20.5 | 15.5 | - | - | - | 4.5 | - | | No | 18.2 | Comparative Example |
| 6 | 65.2 | - | 4.2 | 28.1 | - | - | - | 2.8 | - | | No | 16.3 | Comparative Example |
| 7 | 45.6 | 3.9 | 17.6 | 28.4 | - | - | - | 4.5 | - | | No | 0.0 | Comparative Example |
| 8 | 55.6 | 4.2 | 8.8 | 28.6 | - | - | - | 2.8 | - | | No | 0.0 | Comparative Example |
| 9 | 55.6 | 4.2 | 8.8 | 28.6 | - | - | - | 2.8 | - | | Yes | 0.0 | Comparative Example |
| 10 | 47.7 | 8.9 | 22.4 | - | 10.5 | 1.0 | 6.7 | 2.8 | - | | No | 0.0 | Conventional Example |
| 11 | 48.8 | - | 14.2 | 26.1 | 8.0 | - | - | 2.9 | - | | No | 82.6 | Invention Example |
| 12 | 49.5 | - | 17.4 | 28.1 | - | 0.8 | - | 4.2 | - | | No | 92.5 | Invention Example |
| 13 | 49.7 | - | 17.5 | 25.1 | - | - | 4.9 | 2.8 | - | | No | 91.3 | Invention Example |
| 14 | 49.4 | - | 17.4 | 25.1 | - | - | - | 2.9 | 5.2 | | No | 88.2 | Invention Example |
| 15 | 49.1 | - | 17.5 | 28.8 | - | - | - | 4.1 | - | Mg:0.5 | No | 93.1 | Invention Example |
| 16 | 48.1 | - | 15.6 | 25.1 | 4.2 | 0.5 | 2.1 | 2.8 | 1.6 | | No | 83.4 | Invention Example |
| 17 | 41.9 | - | 17.1 | 41.0 | - | - | - | - | - | | No | 23.3 | Comparative Example |

| | | | | | | | | | | | | | |
|---|---|---|---|---|---|---|---|---|---|---|---|---|---|
| Note) Symbol "-" means that the element is not actively added as a component of the coating material. | | | | | | | | | | | | | |

In each of samples No. 1 to 4 and 11 to 16, the component composition of the coating material is within the range of the embodiment, and a sufficient thickness of the coating remained after the corrosion test. In each of samples No. 7 to 10 that contain Ni, the coating was worn and the base material was corroded after the corrosion test. In each of samples No. 5, 6, and 17 in which Co, Cr, or Mo does not meet the range of the embodiment, a sufficient thickness of the coating did not remain after the corrosion test. From samples No. 1 to 4, it can be seen that even when the component composition of the coating material is the same, performing the inorganic sealing treatment improves the corrosion resistance and leads to a higher remnant ratio of coating.

### <Example 2>

Regarding samples No. 1 and 3 of Table 1, FIG. 3 shows SEM images and analysis results of surface cross-sections of the samples after the corrosion test at high temperature according to with or without the sealing treatment. FIGs. 3 (a1) to (a4) show an SEM picture of the surface cross-section, a map of an O analysis, a map of an Si analysis, and a map of a Cr analysis, respectively, in the case where the sealing treatment was not performed. In the case where the sealing treatment was not performed, a large amount of Cr₂O₃ is formed on the coating surface. FIGs. 3(b1) to 3(b4) show an SEM picture of the surface cross-section, a map of an O analysis, a map of an Si analysis, and a map of a Cr analysis, respectively, in the case where the sealing treatment is performed. In the case where the sealing treatment was performed, a large amount of SiO₂ is formed on the coating surface, while Cr₂O₃ is not formed. Thus, in both cases, entry of S can be prevented as an oxide film is formed on the surface. However, in the case where the sealing treatment is performed, the coating changes less in components from the initial state and the surface properties are maintained. Therefore, performing the sealing treatment can be said to be more preferable in applying the present invention to actual equipment.

### <Example 3>

The present invention was applied to a roll of an actual annealing furnace. The coating material of sample No. 3 (an example of the invention) and the coating material of sample No. 10 (a conventional example) were plasma-sprayed onto a surface of a hearth roll of an annealing furnace. FIG. 4 shows SEM pictures of surface cross-sections after 4320-hour use. It can be seen that, in the conventional example, little of the coating remains after use, whereas in the example of the invention, the coating is hardly worn.

### Industrial Applicability

The technique according to the present invention proposed in the form of the coating material, the surface coating method, and the in-furnace structure could be deployed also in other fields, for example, the field of high-temperature corrosive environments in general.

### Reference Signs List

- 1: Base material
- 2: Coating
- 3: Sample
- 4: Corrosion ash application region

## Claims

1. A coating material for an in-furnace structure used in a high-temperature corrosive environment including a sulfur group element, **characterized in that** the coating material comprises as component composition, by mass, Co: 45% to 72%, both inclusive, Mo: 20% to 35%, both inclusive, Cr: 8% to 25%, both inclusive, and Si: 0.1% to 5%, both inclusive, and substantially without Ni.

2. The coating material for an in-furnace structure according to claim 1, wherein the coating material further comprises as component composition, by mass, at least one element selected from Al: 8.0% or less, Y: 1.5% or less, Ta: 7.0% or less, Mg: 2.0% or less, and W: 8.0% or less.

3. A surface coating method for an in-furnace structure used in a high-temperature corrosive environment including a sulfur group element, **characterized in that** a coating is formed on a surface of the in-furnace structure by overlay welding or thermal spraying using the coating material for an in-furnace structure as claimed in claim 1 or 2.

4. An in-furnace structure used in a high-temperature corrosive environment including a sulfur group element, **characterized in that** a coating using the coating material for an in-furnace structure as claimed in claim 1 or 2 is formed on a surface of the in-furnace structure.

5. The in-furnace structure according to claim 4, wherein the coating is formed by a thermal spraying method, and pores in the coating are sealed with an inorganic sealer.

6. The in-furnace structure according to claim 4 or 5, wherein the in-furnace structure is a roll inside an annealing furnace.
